# EUROPEAN PATENT APPLICATION

(11) **EP 2 858 022 A1**
(43) Date of publication of application: **08.04.2015**
(21) Application number: 13796846.7
(22) Date of filing: 19.03.2013
(51) Int. Cl.: G06Q 30/06, G06Q 30/02

(54) **ELECTRONIC DEVICE**

(30) Priority: 28.05.2012 JP 2012121008; 28.05.2012 JP 2012121009
(71) Applicant: Nikon Corporation, Tokyo 100-8331 (JP)
(72) Inventor: TOMII, Hiromi, Tokyo 100-8331 (JP); YAMAMOTO, Sayako, Tokyo 100-8331 (JP); MATSUMURA, Mitsuko, Tokyo 100-8331 (JP); SAMEJIMA, Saeko, Tokyo 100-8331 (JP); NAKAMURA, Yae, Tokyo 100-8331 (JP); SEKIGUCHI, Masakazu, Tokyo 100-8331 (JP)
(74) Representative: Viering, Jentschura & Partner Patent- und Rechtsanwälte
(86) International application number: PCT/JP2013/057764
(87) International publication number: WO 2013/179730

(57) **Abstract**

In order to support joint purchase of a commodity by a plurality of persons, an electronic device includes: an information offering unit (26, 21) that offers information on joint purchase of a commodity to a plurality of candidates; and an adjusting unit (26) that performs adjustment about the commodity.

## Description

### TECHNICAL FIELD

The present invention relates to an electronic device.

### BACKGROUND ART

Conventionally, in order not to get a gift which a user does not like or not to get redundant gifts, there has been proposed a request function of allowing the user to request a friend to give a gift via a server, and then a part of the request function has been achieved (e.g. see Patent Document 1).

### PRIOR ART DOCUMENTS

### PATENT DOCUMENTS

Patent Document 1: Japanese Laid-open Patent Publication No. 2002-312613

### SUMMARY OF THE INVENTION

### PROBLEMS TO BE SOLVED BY THE INVENTION

However, since the conventional request function is a request addressed to an individual, there is a case where the request function cannot be used according to an aspect of giving or receiving the gift.

The present invention has been made in view of the above problem, and aims to provide an electronic device that can support joint purchase of a commodity by a plurality of persons.

### MEANS FOR SOLVING THE PROBLEMS

The electronic device of the present invention includes: an information offering unit that offers information on joint purchase of a commodity to a plurality of candidates; and an adjusting unit that performs adjustment about the commodity.

In this case, the adjusting unit can adjust which of a purchase side of the commodity or a reception side of the commodity an initiative about the decision of the commodity is given to. Also, the information offering unit can offer information on a receiver of a jointly purchased commodity to the plurality of candidates.

The electronic device of the present invention may include a first collection unit that collects the information on the receiver of the commodity from the plurality of candidates. Also, the electronic device of the present invention may include a second collection unit that collects information on the commodity from the plurality of candidates.

In the electronic device of the present invention, the adjusting unit may divide the plurality of candidates into a plurality of groups, based on an attribute of a receiver of a jointly purchased commodity. In this case, the information offering unit may offer different information as the information on joint purchase of the commodity to each group. Moreover, the plurality of groups include a first group and a second group, and the information offering unit may shift timing which offers information to the first group from timing which offers information to the second group.

In the electronic device of the present invention, the adjusting unit may perform adjustment about the decision of the commodity. Also, the adjusting unit may perform adjustment about a price of the commodity. Also, the adjusting unit may offer information on a purchase place of the commodity.

The electronic device of the present invention may include a first storage that stores information on a receiver of a jointly-purchased commodity, and the information offering unit may offer the information on joint purchase of the commodity to the plurality of candidates based on the information on the receiver stored into the first storage. In this case, the information on the receiver of the jointly-purchased commodity includes at least one of information on a commodity which the receiver desires, and information on a commodity which the receiver purchased in the past.

The electronic device of the present invention may include a second storage that stores event information, and the information offering unit may offer the information on joint purchase of the commodity to the plurality of candidates, based on the event information stored into the second storage.

The electronic device of the present invention may include a third storage that stores image data about the plurality of candidates. In this case, the third storage may store image data about the commodity. In this case, the electronic device may include an image synthesis unit that synthesizes the image data about the plurality of candidates and the image data about the commodity which are stored into the third storage.

The electronic device of the present invention may include a fourth storage that stores an image of a receiver of a jointly-purchased commodity. The electronic device of the present invention may include a fifth storage that stores information on the joint purchase. Also, the information offering unit may offer information on replacement by purchase.

The electronic device of the present invention may include an information obtaining unit that obtains information on a purchase commodity or a purchase scheduled commodity of a first group; and an information offering unit that offers information on a commodity relevant to the purchase commodity or the purchase scheduled commodity of the first group to a second group, based on the information obtained by the information obtaining unit, the second group being different from the first group.

In this case, the electronic device of the present invention may include a recruit unit that recruits a member belonging to at least one of the first group and the second group by self-recommendation or recommendation by others. In this case, the recruit unit may recruit a member of the recommendation by others by designation from a receiver of commodities which the first group and the second group have purchased.

In the electronic device of the present invention, the information offering unit may offer information on a purchase place of the relevant commodity. In this case, the electronic device of the present invention may include a position information detecting unit that detects position information of each member belonging to the second group, and the information offering unit may offer the information on the purchase place of the relevant commodity, based on the position information of each member belonging to the second group.

Also, the information offering unit may offer the information on the relevant commodity, based on information on a number of members belonging to the second group. Also, the information offering unit may offer information on a commodity cheaper than the purchase commodity or the purchase scheduled commodity of the first group, as the information on the relevant commodity. Also, the information offering unit may offer the information on the relevant commodity in response to a request from the second group.

The electronic device of the present invention may include an event storage that stores event information, and the information offering unit may offer the event information stored into the event storage, to the first group and the second group. The electronic device of the present invention may include an adjusting unit that divides a plurality of members into the first group and the second group according to an attribute of each member. Also, the electronic device of the present invention may include an image storage that stores an image of a member belonging to the first group, and/or an image of a person relevant to a member belonging to the second group. In this case, the electronic device of the present invention may include a creating unit that creates notification information to a receiver of commodities which the first group and the second group have purchased, with the use of the image stored into the image storage.

### EFFECTS OF THE INVENTION

An electronic device of the present invention can support joint purchase of a commodity by a plurality of persons.

### BRIEF DESCRIPTION OF DRAWINGS

FIG. 1 is a diagram illustrating the configuration of an information processing system according to an embodiment;
FIG. 2 is an appearance diagram of a portable device;
FIG. 3 is a block diagram illustrating the information processing system according to the embodiment;
FIG. 4 is a flowchart for registering a gift requester to a server from the portable device;
FIG. 5 is a diagram illustrating an example of a gift requester registration screen;
FIG. 6 is a diagram illustrating an example of a gift requester DB;
FIG. 7 is a diagram illustrating an example of a candidate input screen;
FIG. 8 is a diagram illustrating an example of a candidate DB;
FIG. 9A is a diagram illustrating an example of a requester addition confirmation screen;
FIG. 9B is a diagram illustrating an example of a message screen;
FIG. 10 is a diagram illustrating an example of a gift desire registration screen;
FIG. 11 is a flowchart illustrating a process for obtaining a candidate's acceptance;
FIG. 12A is a diagram illustrating an example of a communication screen;
FIGs. 12B and 12C are diagrams illustrating examples of confirmation screens;
FIG. 13 is a diagram illustrating an example of a true candidate DB;
FIG. 14 is a flowchart illustrating a gift request process;
FIG. 15 is a diagram illustrating an event communication screen;
FIG. 16 is a flowchart illustrating a concrete process of step S210 of FIG. 14;
FIGs. 17A to 17C are diagrams illustrating examples of request screens for a relative group;
FIG. 18 is a diagram illustrating an example of a request screen for a friend group;
FIG. 19A is a diagram illustrating an example of an acceptant table (relative);
FIG. 19B is a diagram illustrating an example of an acceptant table (friend);
FIG. 20 is a diagram illustrating an example of a selection screen; and
FIG. 21 is a diagram illustrating an example of an information providing screen.

### MODES FOR CARRYING OUT THE INVENTION

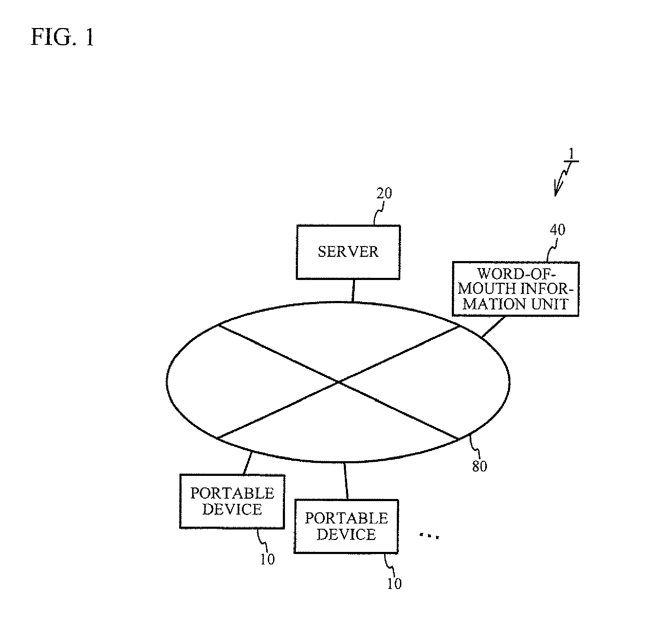

Hereinafter, a detailed description will be given of an embodiment, based on FIGs. 1 to 21. The configuration of an information processing system 1 according to the embodiment is schematically illustrated in FIG. 1.

The information processing system 1 includes a plurality of portable devices 10, a server 20 and a word-of-mouth information unit 40. The portable devices 10, the server 20 and the word-of-mouth information unit 40 are connected to a network 80 such as an internet.

Each portable device 10 is a device such as a cellular phone, a smart phone, a PHS (Personal Handy-phone System), and a PDA (Personal Digital Assistant). Here, in the present embodiment, a portable device which a user who gets a gift uses is called "a portable device 10A" or "a portable device 10A of a request side", and a portable device which a user who gives the gift uses is called "a portable device 10B" or "a portable device 10B of a requested side".

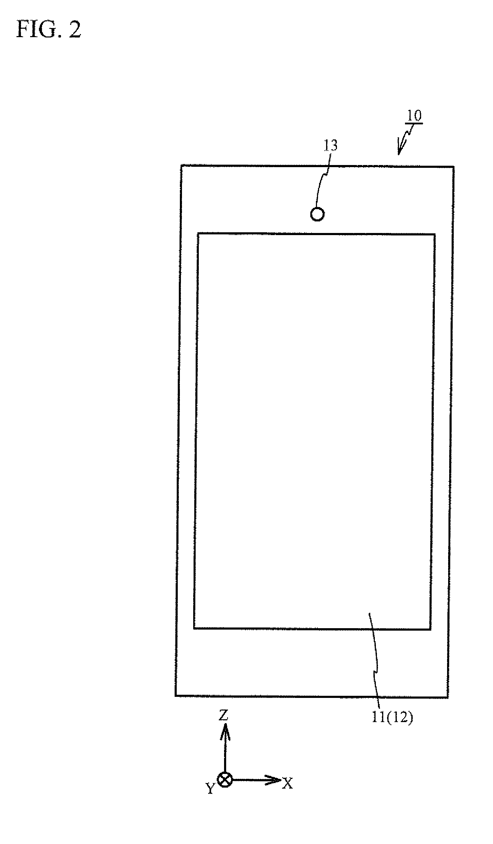

The portable device 10A has a telephone function, a communication function for connecting to the internet, and a data process function for executing a program. As an example, the portable device 10A has a thin plate-like form having a rectangular principal surface (-Y surface of Fig. 2), and has a size of the degree that the user can hold it with a palm of one hand, as illustrated in FIG. 2 which is an appearance diagram of the portable device 10.

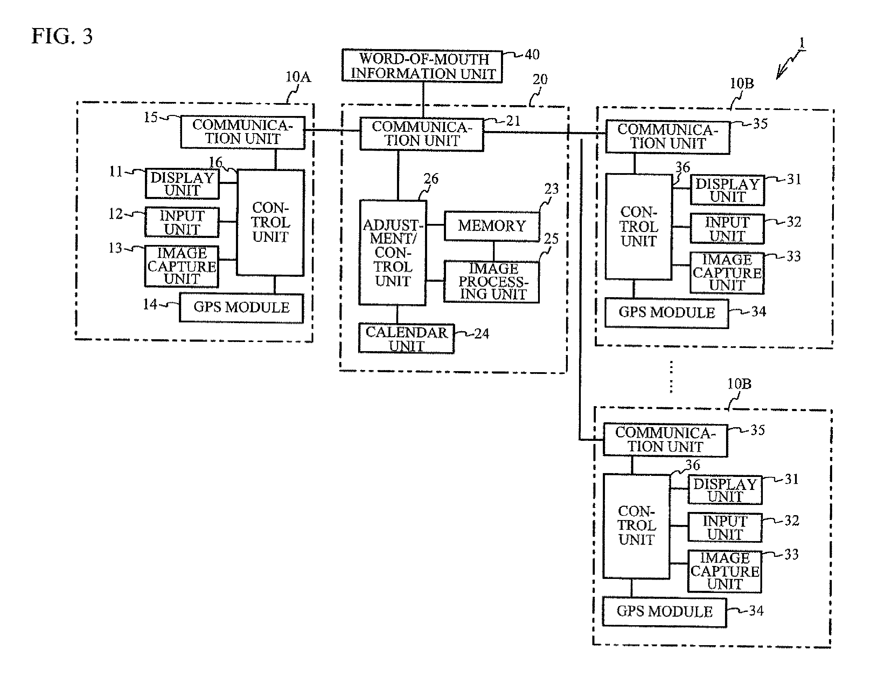

The portable device 10A includes a display unit 11, an input unit 12, an image capture unit 13, a GPS (Global Positioning System) module 14, a communication unit 15, and a control unit 16, as illustrated in FIG. 2, and FIG. 3 that is a block diagram of the information processing system 1.

The display unit 11 is a device using a liquid-crystal-display element, for example, and displays an operation input image, such as an image, various information and a button. In the present embodiment, the input unit 12 is a touch panel provided on the surface of the display unit 11, and inputs information indicating that the user touched the surface (input unit 12) of the display unit 11, and information according to a motion of a user's finger. Here, the input unit 12 may be a keyboard, such as a ten key.

The image capture unit 13 has a photographing lens and an image sensor (CCD and CMOS device). The image capture unit 13 of the present embodiment is used to capture images of the user and a commodity which the user wants. Here, the image capture unit 13 may be provided on a same surface on which the display unit 11 is provided, as illustrated in FIG. 2, or may be provided on a surface (a reverse surface) different from a surface on which the display unit 11 is provided. In addition, a plurality of image capture units 13 may be provided on both surfaces (the principal surface and a surface different from the principal surface). The GPS module 14 is a sensor which detects the position (e.g. latitude and longitude) of the portable device 10A. The communication unit 15 communicates with the server 20 and another portable devices 10 via the network 80. The communication unit 15 includes a wireless communication unit which accesses a wide area network, such as the internet, a Bluetooth (registered trademark) unit which realizes communication by Bluetooth (registered trademark), a Felica (registered trademark) chip, and so on, for example.

The control unit 16 has a CPU, controls each element of the portable device 10A totally and performs various processes about the gift.

The portable device 10B of the requested side is a device for responding to the gift request from the portable device 10A via the server 20. As with the portable device 10A, the portable device 10B includes a display unit 31, an input unit 32, an image capture unit 33, a GPS module 34, a communication unit 35 and a control unit 36, as illustrated in FIG. 3. Since the respective elements are the same as or similar to those of the portable device 10A, a description thereof is omitted.

The server 20 has a function that requests a gift from the portable device 10B of the requested side, based on input information inputted from the portable device 10A of the request side. The server 20 includes a communication unit 21, a memory 23, a calendar unit 24, an image processing unit 25, and an adjustment/control unit 26, as illustrated in FIG. 3.

The communication unit 21 communicates with the portable device 10A of the request side, the portable device 10B of the requested side, and the word-of-mouth information unit 40, and acquires (inputs) various information. The communication unit 21 includes a wireless communication unit which accesses a wide area network, such as the internet, a Bluetooth (registered trademark) unit which realizes communication by Bluetooth (registered trademark), a Felica (registered trademark) chip, and so on, for example.

The adjustment/control unit 26 includes a CPU, controls each element of the server 20, and performs various control and processes in order to give or receive the gift appropriately. For example, the adjustment/control unit 26 performs various adjustments (adjustment of a number of persons (i.e., requested persons or candidates) which give the gift, adjustment (selection) of attributes and categories of requested persons or candidates, adjustment for deciding the commodity, adjustment of a requester main mode and a candidate main mode mentioned later, adjustment of other various information, and so on) until the gift is purchased. Here, in the present embodiment, software of an application is installed in the server 20, so that a function of the adjustment/control unit 26 is realized.

The memory 23 is a nonvolatile memory (e.g. a flash memory), and stores images captured with the image capture units 13 and 33 of the portable devices 10A and 10B, information and images acquired from the word-of-mouth information unit 40, various information such as a history of the gift, a database mentioned later, and so on.

The calendar unit 24 acquires time information, such as a year, a month, a day, a time, and outputs the time information to the adjustment/control unit 26. The calendar unit 24 has a time function.

The image processing unit 25 performs a process which generates a new image with the use of at least a part of plural images stored in the memory 23.
For example, the image processing unit 25 performs a process which combines an image of the gift and a sender's image.

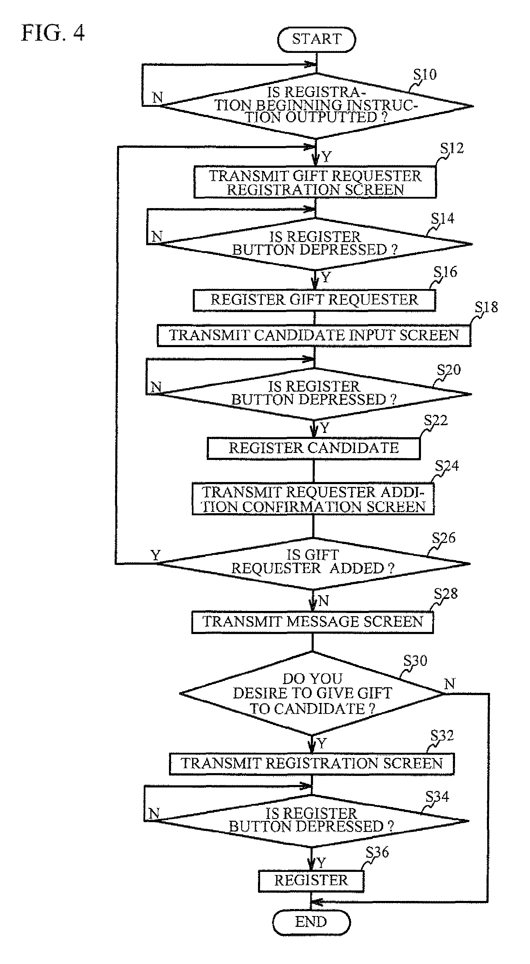

Next, a detailed description will be given of a process of an information processing system 1 according to the present embodiment constituted as mentioned above, based on FIGs. 4 to 21.

(User Registration Process of Request Side) FIG. 4 is a flowchart indicating that the user (i.e., the user of the request side) registers a gift requester to the server 20 from the portable device 10A. Here, the gift requester may be a user of the portable device 10A, or a person other than the user. A process of FIG. 4 is begun in a state where communication between the portable device 10A and the server 20 is established.

In the process of FIG. 4, the adjustment/control unit 26 of the server 20 waits in step S10 until a registration beginning instruction is outputted from the portable device 10A. In this case, in a stage in which the user of the portable device 10A depresses a start button for user registration via the input unit 12, the procedure advances to step S12.

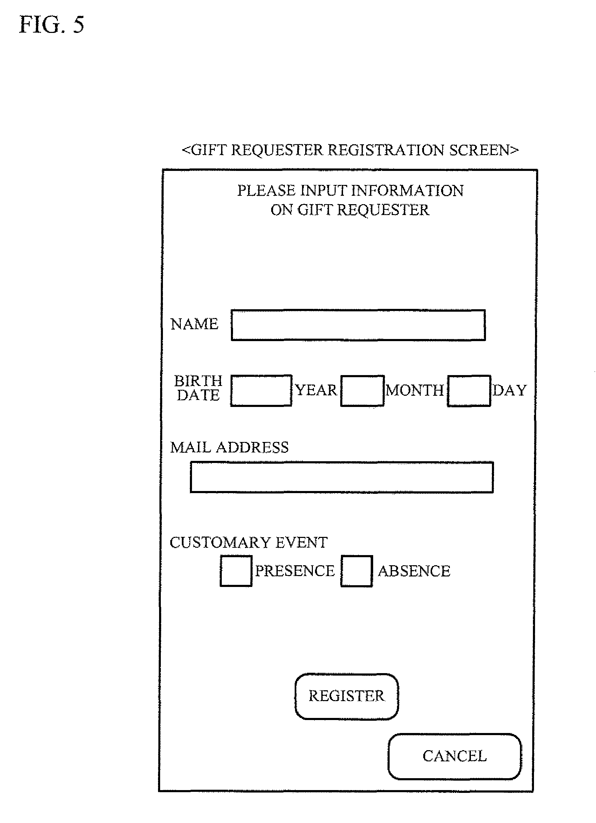

Advancing to step S12, the adjustment/control unit 26 transmits a gift requester registration screen (see FIG. 5) to the portable device 10A via the communication unit 21. The gift requester registration screen includes columns for inputting a name, a birth date and a contact address (e.g. a mail address) of the gift requester, a check box for inputting the presence or absence of a customary event, a " register" button, and a "cancel" button, as illustrated in FIG. 5.

Next, in step S14, the adjustment/control unit 26 waits until each column of the gift requester registration screen is inputted by the user of the portable device 10A and the register button is depressed. In this case, in a stage where the register button is depressed by the user of the portable device 10A, the procedure advances to step S16.

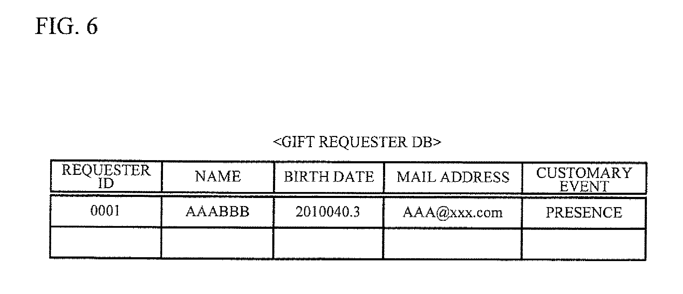

Advancing to step S16, the adjustment/control unit 26 acquires (inputs) the name, the birth date and the contact address (the mail address or the like) of the gift requester, and the presence or absence of the customary event via the communication unit 21, and registers the acquired information into a gift requester DB (see FIG. 6) stored in the memory 23.

Hereinafter, the present embodiment is explained assuming that the user of the portable device 10A registers a user's child (name "AAABBB") as the gift requester (requester ID = 001). However, the gift requester is not limited to this, and the user may register the user or others other than the child as the gift requester.

Here, the customary event means an event (e.g. an event, such as a birthday, entrance into school or Christmas) which can be automatically extracted from the birth date of the gift requester and information of the calendar unit 24. Therefore, when the user checks the check box indicative of the presence of the customary event in the gift requester registration screen, the adjustment/control unit 26 performs a process which confirms to the user of the portable device 10 whether a gift request is automatically performed before each customary event or the gift request is performed for each customary event. Here, when the gift requester is the user and the gift request is automatically performed without needing the confirmation of the user before the customary event, there is an effect (a surprise effect) that can send an unexpected gift to the user. On the other hand, when the user checks the check box indicative of the absence of the customary event, the user needs to perform the gift request whenever the event occurs.

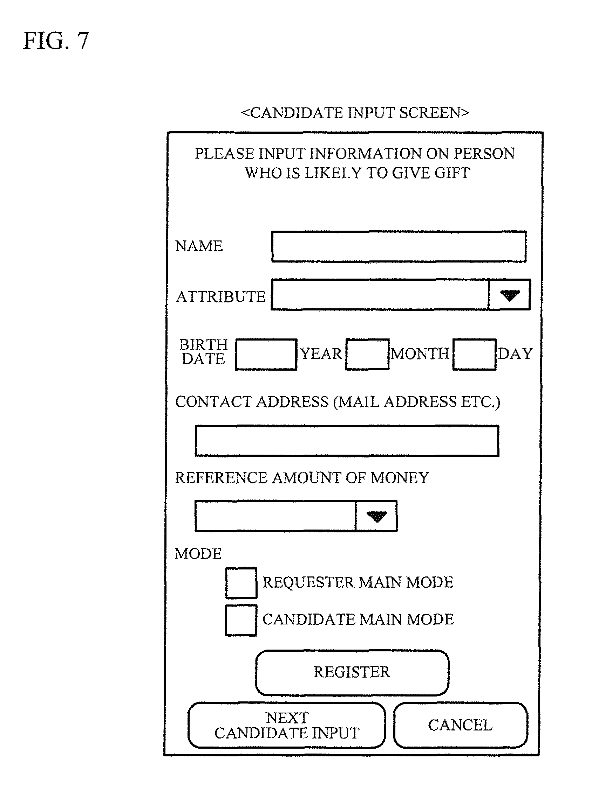

Next, in step S18, the adjustment/control unit 26 transmits a candidate input screen (see FIG. 7) for inputting a person (a candidate) who is likely to accept the gift request of the gift requester, to the portable device 10A. Here, the candidate input screen includes a name, an attribute, a birth date and a contact address (e.g. a mail address) of the candidate, a column for inputting a reference amount of money, a check box for selecting any one of the requester main mode and the candidate main mode, a "register" button, a "next candidate input" button and a "cancel" button, as illustrated in FIG. 7.

A category, such as grandparents, an uncle, an aunt, and a friend (a mother's friend), can be inputted into the column of the attribute. A cost which can be perhaps requested to the candidate can be inputted into the column of the reference amount of money. Here, the input to the column of the reference amount of money may be indispensable, or may not be indispensable. Moreover, the reference amount of money may be automatically inputted for the inputted attribute. The reference amount of money may be automatically inputted for every inputted attribute. Here, the automatically inputted reference amount of money may be able to be modified later.

The requester main mode is a mode in which the user of the portable device 10A and the gift requester have an initiative which specifies the content of the gift. The candidate main mode is a mode in which the candidate has an initiative which decides the content of the gift. Here, when a grandfather, a grandmother, an uncle, an aunt or the like in inputted into the column of the attribute, for example, the adjustment/control unit 26 may automatically put a check into the requester main mode. When the friend (the mother's friend) is inputted, the adjustment/control unit 26 may automatically put a check into the candidate main mode (here, the user can change the check later). When the presence of the customary event is selected in the gift requester registration screen (FIG. 5) and the adjustment/control unit 26 does not perform the confirmation to the gift requester for every event, as described above, the adjustment/control unit 26 may fix the mode in the candidate main mode (only candidate subject mode can be selected).

Next, in step S20, the adjustment/control unit 26 waits until the register button is depressed in the portable device 10A. Here, the user of the portable device 10A can input information on a plurality of candidates by depressing the "next candidate input" button of the candidate input screen.

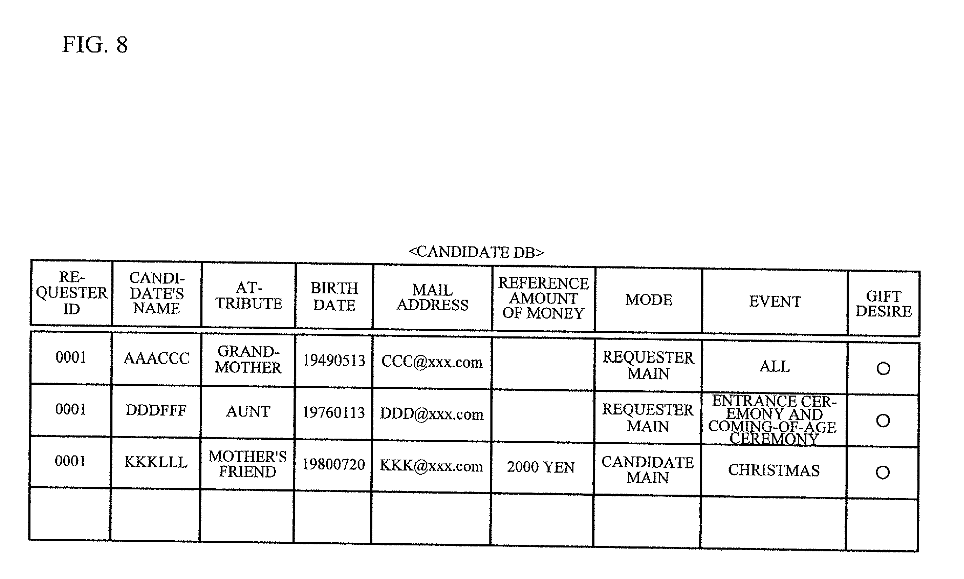

When the user of the portable device 10A depresses the register button in the candidate input screen, the procedure advances to step S22 and the adjustment/control unit 26 registers the information on the inputted candidate into a candidate DB (see FIG. 8). FIG. 8 illustrates a state where four persons of a grandmother, an aunt, and two mother's friends are registered as candidates corresponding to a gift requester ID "001" (Here, in the stage of step S22, a column of "gift desire" in the candidate DB is a blank).

Here, in the present embodiment, it is assumed that when the attribute is the grandfather or the grandmother, a rule in which the grandfather or the grandmother becomes the candidate in all the customary events is defined in the adjustment/control unit 26. Moreover, it is assumed that when the attribute is the uncle or the aunt, a rule in which the uncle or the aunt becomes the candidate in an entrance ceremony and a coming-of-age ceremony among the customary events is defined in the adjustment/control unit 26, and when the attribute is the mother's friend, a rule in which the mother's friend becomes the candidate in Christmas among the customary events is defined in the adjustment/control unit 26. However, the rules are not limited to these, and the user of the portable device 10 may define the rules of the events in which someone becomes the candidate for every attribute.

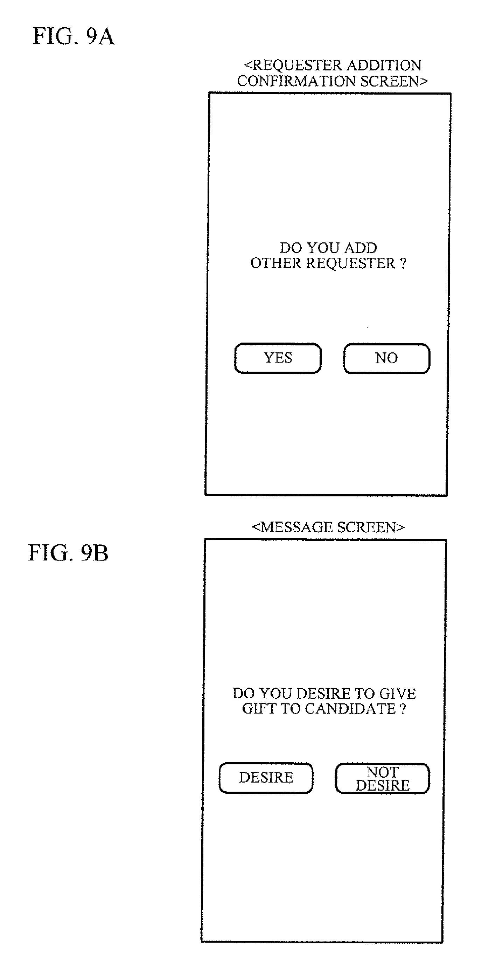

Next, in step S24, the adjustment/control unit 26 transmits to the portable device 10A a screen (i.e., a requester addition confirmation screen: see FIG. 9A) for asking the user whether a gift requester is added. Next, in step S26, the adjustment/control unit 26 judges whether the gift requester is added by confirming whether either a "YES" button or a "NO" button is depressed by the user. When the judgment is positive (i.e., the "YES" button is depressed), the process returns to step S 12 and the processes and the judgment of steps S 12 to S26 are repeated. On the other hand when the judgment of step S26 is negative (i.e., the "NO" button is depressed), the procedure advances to step S28.

Advancing to step S28, when the candidate set by the user becomes the gift requester, the adjustment/control unit 26 transmits a message screen (see FIG. 9B) which asks whether the user desires to give the gift to the gift requester, to the portable device 10A through the communication unit 21. Here, the message screen includes a message, such as "Do you desire to give gift to candidate ?", a "Desire" button, and a "Not Desire" button, as illustrated in FIG. 9B. In this case, the user of the portable device 10A depresses any one of the "Desire" button and the "Not Desire" button.

Next, in step S30, the adjustment/control unit 26 judges whether the user of the portable device 10A depresses the "YES" button. When the judgment is negative, all processes of FIG. 4 are completed. When the judgment is positive (i.e., when the user recommends himself as a gift candidate), the procedure advances to step S32.

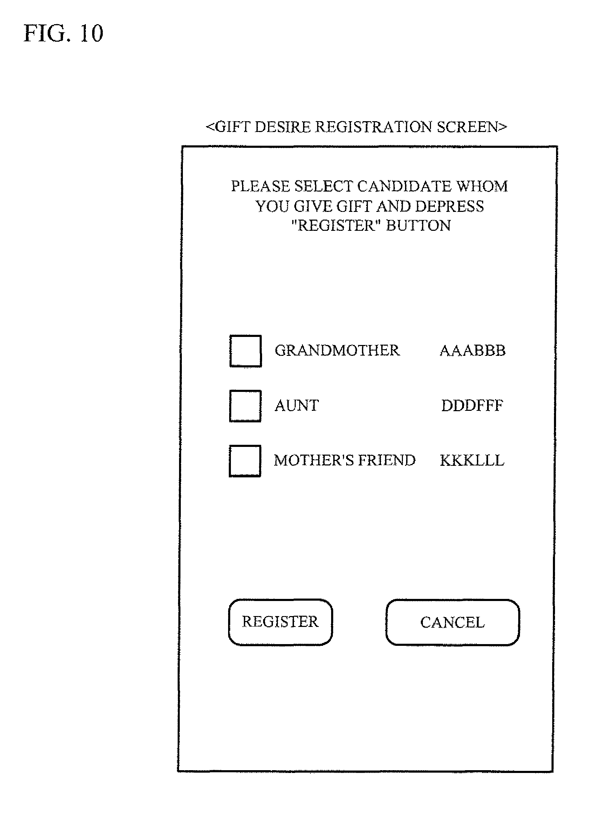

Advancing to step S32, the adjustment/control unit 26 transmits a screen (a gift desire registration screen: see FIG. 10) for inputting (checking) a person who may accept a gift desire when there is the gift desire, to the portable device 10A via the communication unit 21. Next, in step S34, the adjustment/control unit 26 waits until the register button is depressed by the user of the portable device 10A, and when the register button is depressed, the procedure advances to step S36. Here, in the present embodiment, it is assumed that the register button is depressed in a state where checks corresponding to all of the grandmother, the aunt and the mother's friend are inputted in the screen of FIG. 10.

Advancing to step S36, the adjustment/control unit 26 registers a mark "o" into the column of the gift desire in the candidate DB (FIG. 8) corresponding to a checked candidate on the gift desire registration screen of FIG. 10, and registers a mark "?" into the column of the gift desire corresponding to an unchecked candidate. Then, all the processes of FIG. 4 are completed.

Here, when the candidate is registered on the candidate input screen of FIG. 7, information indicating that the user desires to give the gift to the candidate may be inputted. In this case, the steps S30 to S36 of FIG. 4 can be omitted.

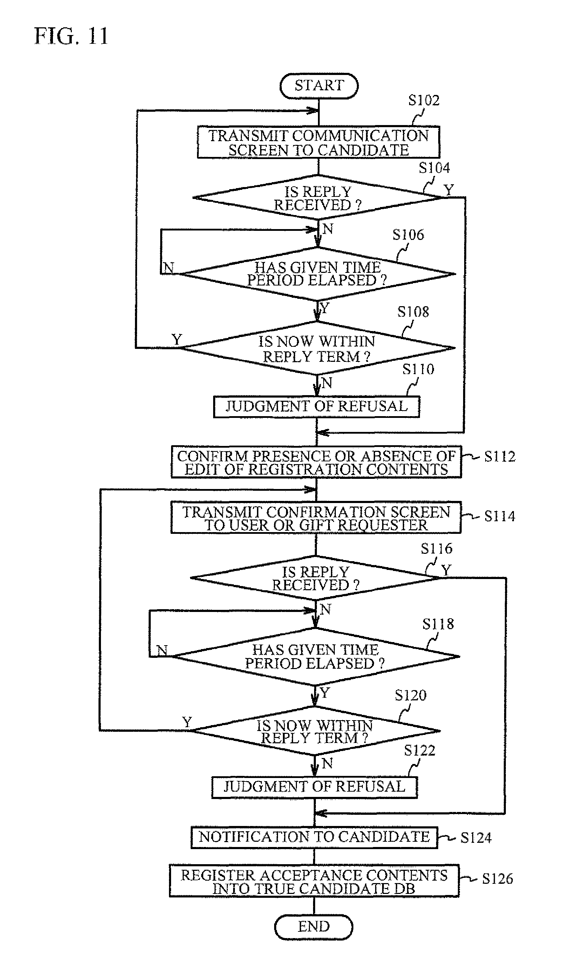

Here, even if a user is registered as the candidate unless the user accepts becoming the candidate, the user cannot become a user who is an object of the gift request (it is called a requested person or a true candidate). This is described in the explanation of processes of FIG. 11 in detail.

(Process for Obtaining Candidate's Acceptance) Next, a description will be given of a process for obtaining a candidate's acceptance performed by the adjustment/control unit 26, based on FIG. 11. Here, the process of FIG. 11 is a process to be begun after a new candidate is registered into the candidate DB (FIG. 8) in the process of FIG. 4.

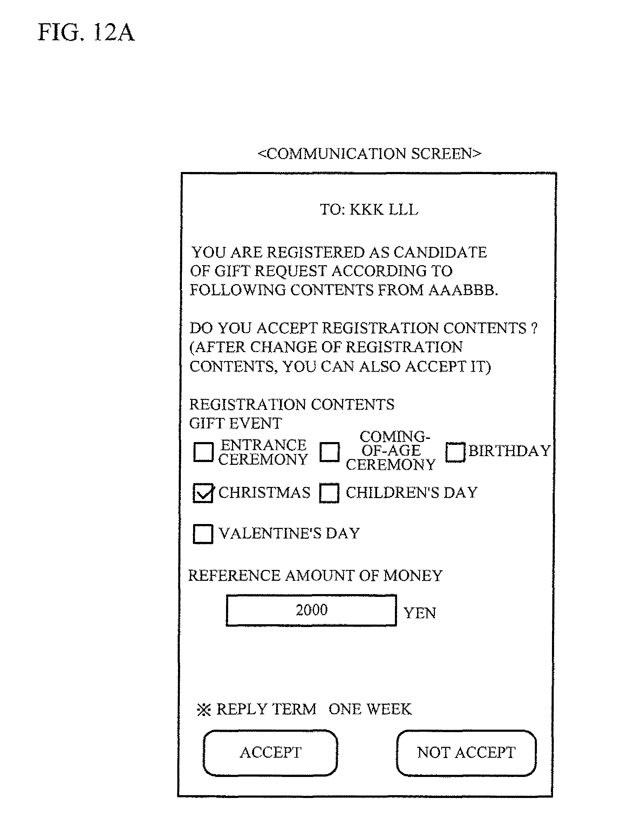

In the process of FIG. 11, the adjustment/control unit 26 transmits a communication screen (see FIG. 12A) with a mail to the portable device 10B of the candidate registered in step S22 of FIG. 4 via the communication unit 21 in step S102. Here, the communication screen includes a message which asks whether the user of the portable device 10B accepts becoming the candidate, registration contents (contents registered in step S22 of FIG. 4), an "Accept" button, a "Not Accept" button, and information indicative of a desired term of a reply (e.g. one week in FIG. 12A). Even when the user accepts a position as the candidate, the user only receives communication of the gift request and does not necessarily need to give the gift. Therefore, it may be indicated in a communication mail of FIG. 12A that the user does not necessarily need to give the gift.

Next, in step S104, the adjustment/control unit 26 judges whether a reply is received from the candidate. When the judgment is positive, the procedure advances to step S112. When the judgment is negative, the procedure advances to step S106. Here, the candidate can edit the registration contents of the communication screen of FIG. 12A, and then depress the "Accept" button.

When the judgment of step S104 is negative and the procedure advances to step S106, the adjustment/control unit 26 judges whether a given time period has elapsed. Here, the given time period is a time period which is shorter than the reply term and is suitable for resending the communication screen led from the reply term (e.g. a time period obtained by dividing a remaining period to the reply term by a given number (e.g. 4)). When the judgment of step S106 is positive, the procedure advances to step S108 and the adjustment/control unit 26 judges whether now is within the reply term. When the judgment of step S108 is positive, the process returns to step S102. On the other hand, when the judgment of step S108 is negative, i.e., when the reply is not obtained within the reply term in spite of having transmitted the communication screen a given number of times (e.g. three times), the procedure advances to step S110.

Advancing to step S110, the adjustment/control unit 26 judges that the candidate has refused the acceptance, and the procedure advances to step S112.

Advancing to step S112, the adjustment/control unit 26 confirms the presence or absence of edit of the registration contents by the candidate.

Here, in the present embodiment, it is assumed that in addition to Christmas, an event of a birthday party has been added from a mother's friend "KKKLLL".

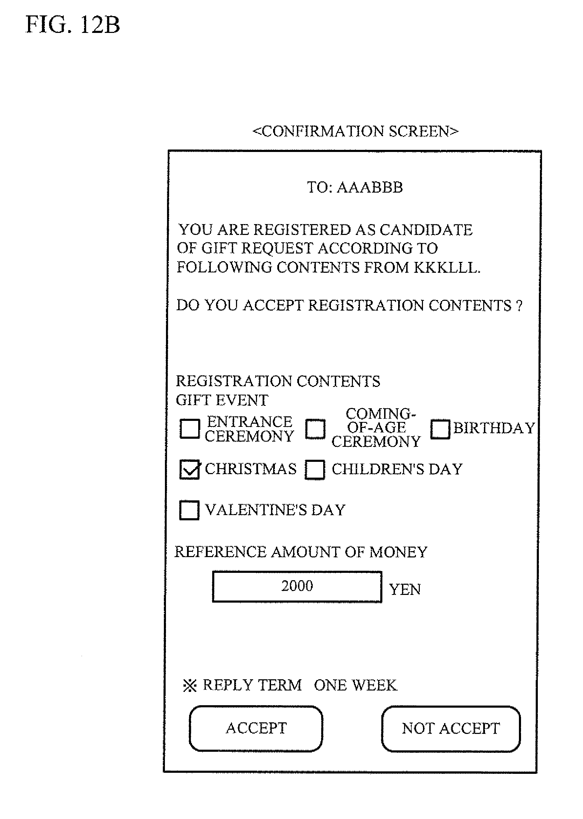

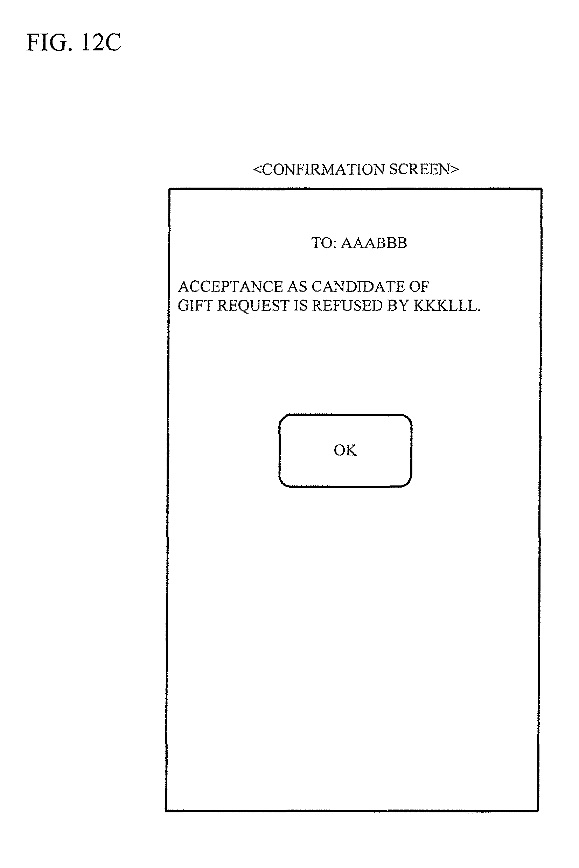

Next, in step S114, the adjustment/control unit 26 transmits a confirmation screen (see FIG. 12B) in which a reply content (i.e., a reply indicative of the acceptance) of the candidate, the registration contents and the reply term are written, to the user of the portable device 10A or the gift requester (here, it is the user of the portable device 10A). When the candidate refuses the acceptance, the adjustment/control unit 26 transmits a screen as illustrated in FIG. 12C to the user or the gift requester, for example.

Next, in step S116, the adjustment/control unit 26 judges whether the reply is received from the user of the portable device 10A. When the judgment of step S116 is positive, the procedure advances to step S118. When the judgment of step S116 is negative, the procedure advances to step S124. Here, even when the user of the portable device 10A depresses an OK button in FIG. 12C, the judgment of step S116 is positive.

When the judgment of step S116 is negative and the procedure advances to S118, the adjustment/control unit 26 judges whether a given time period has elapsed. Here, the given time period is a time period which is shorter than the reply term and is suitable for resending the confirmation screen led from the reply term (e.g. a time period obtained by dividing a remaining period to the reply term by a given number (e.g. 4)). When the judgment of step S118 is positive, the procedure advances to step S120 and the adjustment/control unit 26 judges whether now is within the reply term. When the judgment of step S120 is positive, the process returns to step S114. On the other hand, when the judgment of step S120 is negative, i.e., when the reply is not obtained within the reply term in spite of having transmitted the communication screen a given number of times (e.g. three times), the procedure advances to step S122.

In step S122, the adjustment/control unit 26 judges that the user of the portable device 10A has refused the acceptance, and the procedure advances to step S124.

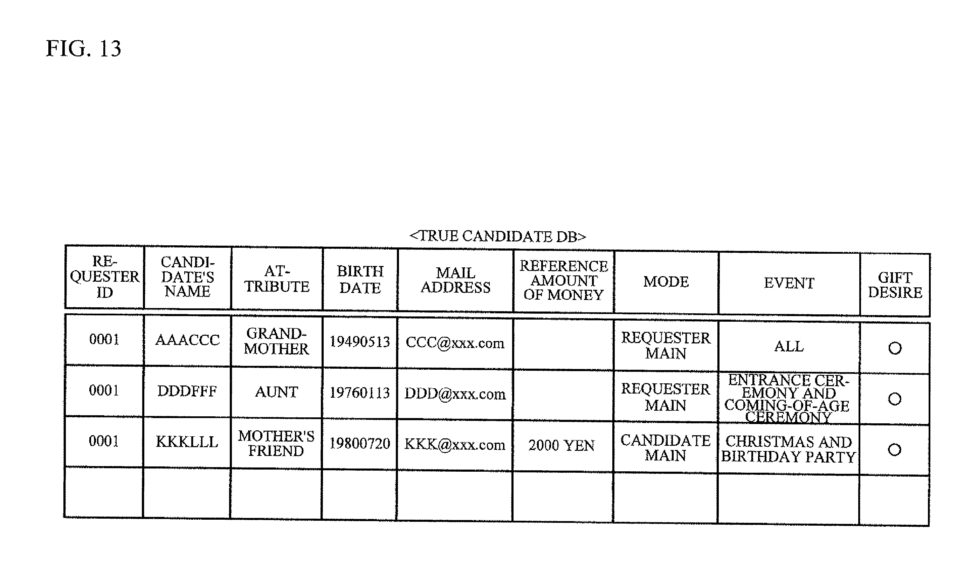

Advancing to step S124, the adjustment/control unit 26 notifies the candidate that the contents have been accepted or refused by the user of the portable device 10A with a mail. Then, when the acceptance is performed between the user of the portable device 10A and the candidate, the adjustment/control unit 26 stores acceptance contents into a true candidate DB illustrated in FIG. 13 in next step S126. Here, FIG. 13 illustrates an example of a case where a grandmother "AAACCC" and an aunt "DDDFFF" accept becoming candidates without editing the registration contents and a mother's friend "KKKLLL" accepts becoming a candidate by editing the registration contents. All the processes of FIG. 11 are completed by the above processes.

Here, in a process beginning stage of FIG. 11, there is a case where a person who desires to give a gift to a gift requester "AAABBB" exists independently (e.g. a case where a person expresses the gift desire to the gift requester "AAABBB" in the candidate DB of FIG. 8). In such a case, the confirmation screen which is the same as FIG. 12A may be transmitted to a portable device of a person (here, a cousin) who desires to give the gift. In this case, it becomes possible to register into the true candidate DB (FIG. 13) the cousin who desires to give the gift by performing the processes of FIG. 11.

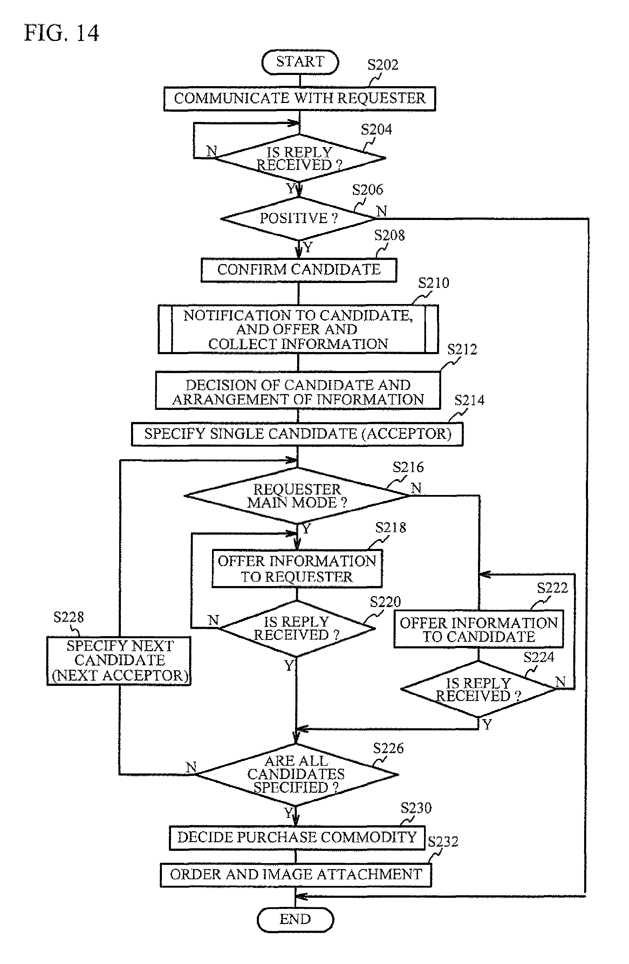

(Gift Request Process) Next, a detailed description will be given of a process which requests the gift to the candidate according to a flowchart of FIG. 14. The process of FIG. 14 is a process to be begun before several weeks of the event about the gift. Hereinafter, a case before several weeks of a birthday of the gift requester (AAABBB) is explained as an example.

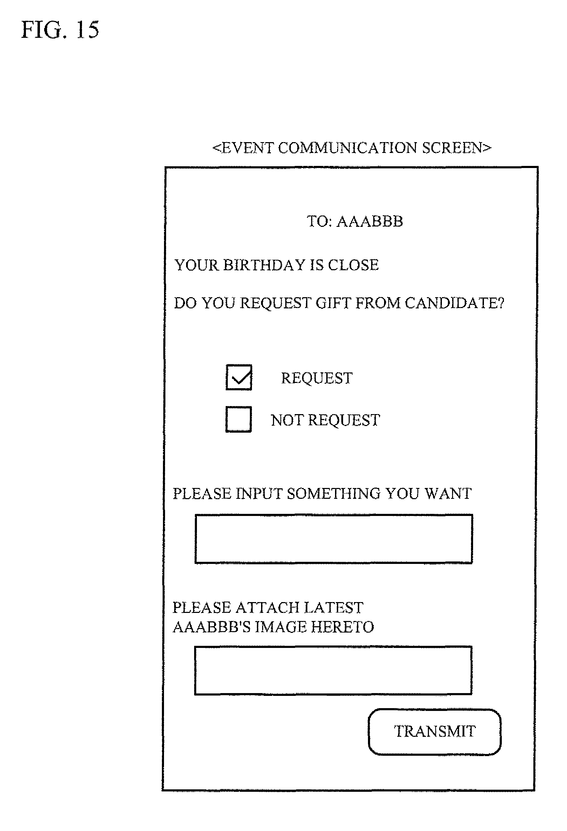

In the process of FIG. 14, in step S202, the adjustment/control unit 26 communicates with the gift requester with reference to the gift requester DB of FIG. 6. In this case, the adjustment/control unit 26 transmits an event communication screen as illustrated in FIG. 15 to the gift requester (or the user of the portable device 10A) via the communication unit 21. Moreover, the event communication screen of FIG. 15 includes a button for answering whether to perform the gift request, a column for inputting a desired gift, a column for attaching an image, and a "transmit" button.

Next, in step S204, the adjustment/control unit 26 waits until the reply is received. Here, if the reply term is set and the reply is not received as with steps S104 to S110 and steps S116 to S122 of FIG. 11, the communication screen may be transmitted several times within the reply term. In this case, when the reply is not received within the reply term, the adjustment/control unit 26 does not need to perform the gift request or may perform the gift request by changing the requester main mode to the candidate main mode.

Here, it is assumed that, in the present embodiment, the reply of "a red bicycle" as a desired gift is obtained from the gift requester "AAABBB" and a latest image of the gift requester "AAABBB" is attached.

Advancing to step S206, the adjustment/control unit 26 judges whether the reply is positive (i.e., a check is inputted in "Request" of FIG. 15). When the judgment of step S206 is negative, all the processes of FIG. 14 are completed. When the judgment of step S206 is positive, the procedure advances to step S208.

Advancing to step S208, the adjustment/control unit 26 confirms the candidate corresponding to the event "birthday", with reference to the true candidate DB of FIG. 13. Here, the grandmother "AAACCC", the aunt "DDDFFF", and the mother's friend "KKKLLL" are confirmed as the candidates. Moreover, the adjustment/control unit 26 confirms that the grandmother and the aunt belong to a group of a "relative" and the mother's friend belongs to a group of a "friend", with the use of an attribute-group correspondence table, not shown. Here, the reason for confirming the group is that, when there are candidates belonging to a same group, an expensive gift can be given by gathering the plurality of candidates giving the gift, compared with a case where each candidate gives the gift, and to gather the candidates of different groups and give the gift is actually rare. Even if residences of the candidates are away from each other, by making the groups, the candidates belonging to the same group can give the gift to the gift requester. Moreover, the adjustment/control unit 26 confirms that the grandmother "AAACCC" and the aunt "DDDFFF" are the requester main mode and the mother's friend "KKKLLL" is the candidate main mode, with reference to the true candidate DB of FIG. 13.

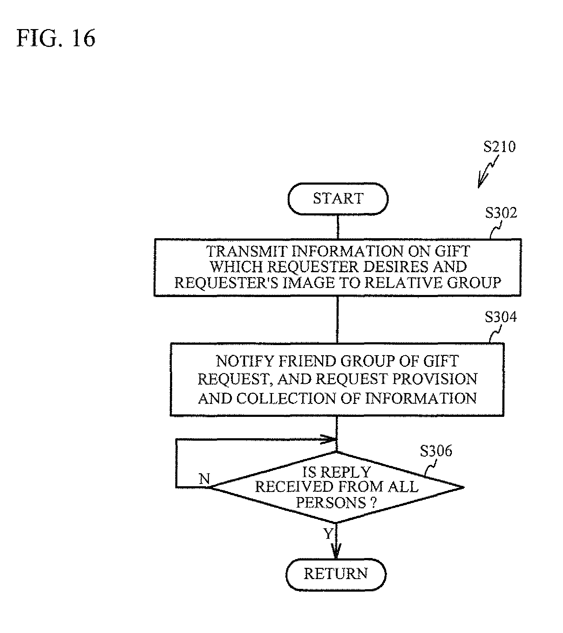

Next, in step S210, the adjustment/control unit 26 notifies the candidate that there has been the gift request of the gift, and offers and collects information on the gift. Specifically, the adjustment/control unit 26 performs a process according to a flowchart of FIG. 16.

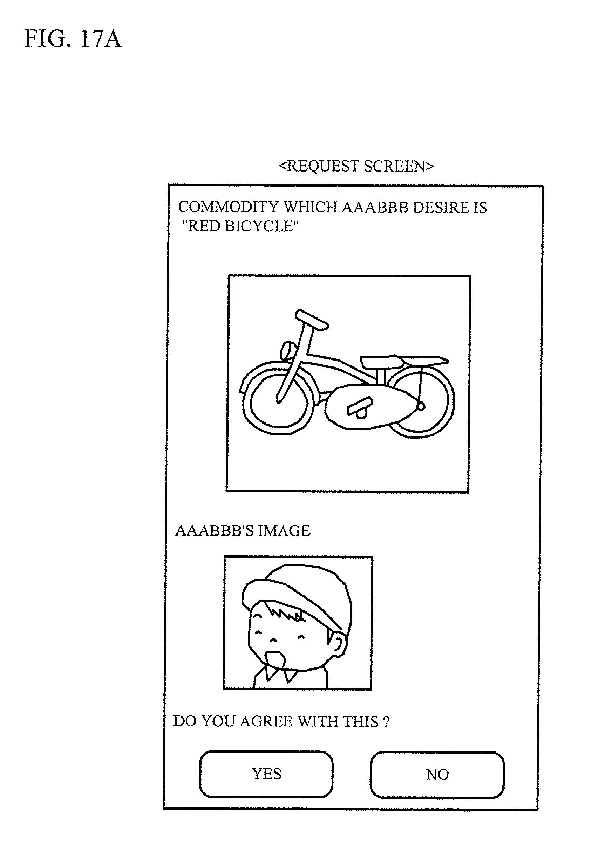

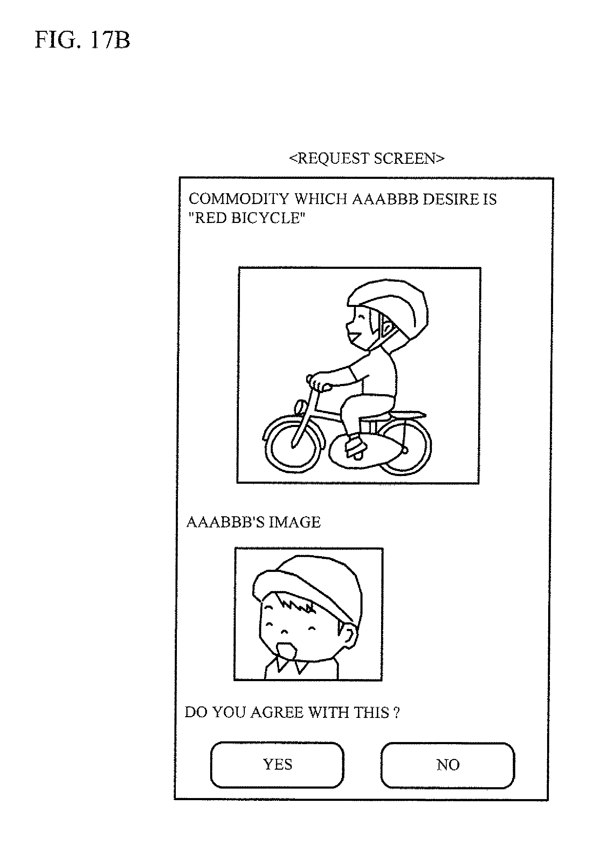

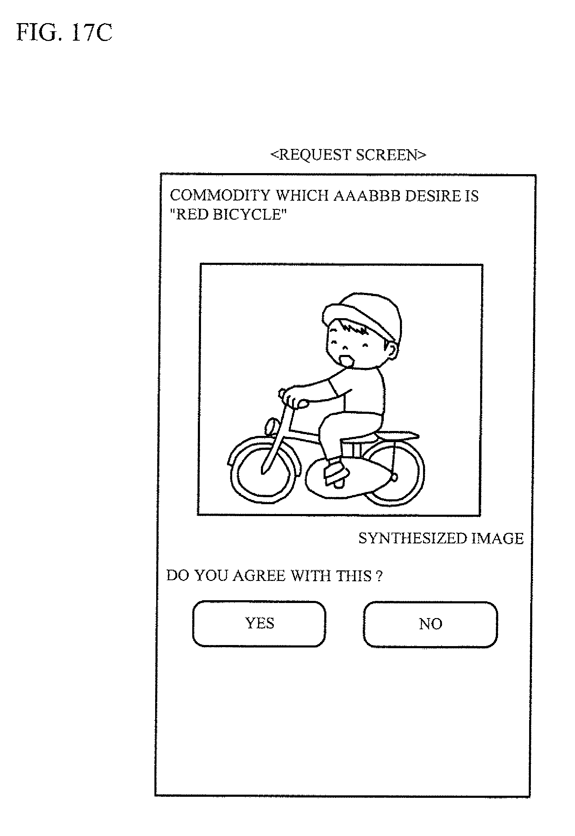

In step S302 of FIG. 16, the adjustment/control unit 26 transmits a request screen (see FIG. 17A) including information on the gift which the gift requester "AAABBB" desires and an image of the gift requester to the grandmother and the aunt of the "relative" group. Specifically, the adjustment/control unit 26 creates the request screen including a name "red bicycle" of the gift desired on the birthday, an image of a red bicycle which is stored into the memory 23 or is obtained from an outside (e.g. the word-of-mouth information unit 40) via the network 80, and an image transmitted from the gift requester, and transmits the request screen, as illustrated in FIG. 17A. When the adjustment/control unit 26 creates the request screen, the adjustment/control unit 26 may obtain from the word-of-mouth information unit 40 an image and information indicating that a child having an age same as an age of the gift requester "AAABBB" rides the red bicycle, and may attach the image and the information to the request screen, as illustrated in FIG. 17B. Alternatively, an image indicating that the child having the same age rides the red bicycle and a face image of the gift requester may be synthesized, and the synthesized image may be attached to the request screen, as illustrated in FIG. 17C. In this case, the image synthesis is performed by the image processing unit 25 of FIG. 2. By doing so, it becomes easy for the grandmother and the aunt to imagine the appearance of the gift requester who uses the gift. The adjustment/control unit 26 may inquire of the candidates the share of a purchase amount in the request screen. In this case, the share of the purchase price can be selected from equability, arbitrary decision, 50%, 5000 yen, or the like, as one example.

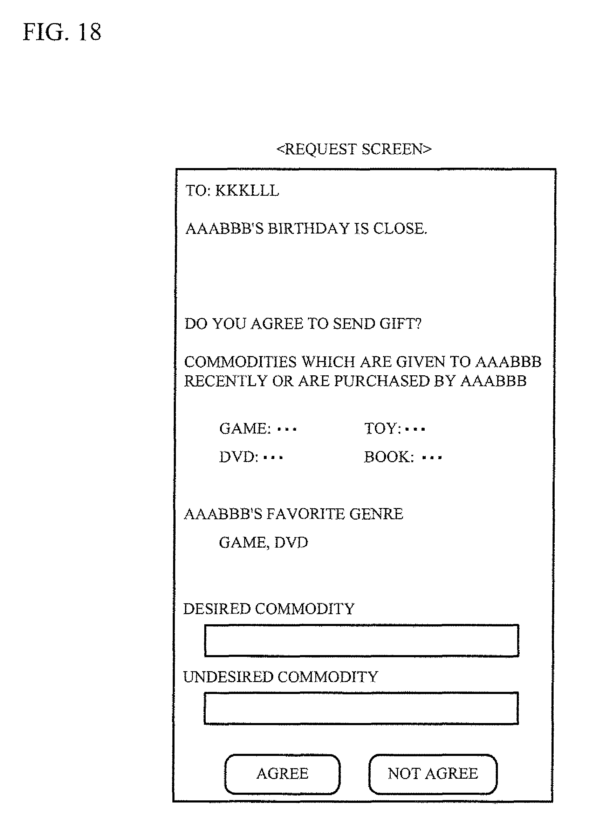

Next, in step S304, the adjustment/control unit 26 transmits a request screen (see FIG. 18) which includes a notification of the gift request about the birthday of the gift requester "AAABBB" and provision of information about the gift to the mother's friend "KKKLLL" of the "friend" group via the communication unit 21.

If information on a commodity which the gift requester has received or the gift requester has bought recently is offered as provision of information about the gift, for example, it is possible to prevent the gift from being the same as a past gift. If information on genres (a game, DVD, and so on) that the gift requester likes and is led from a history of a received gift or a bought gift is offered as provision of information about the gift, the information serve as a useful reference in deciding the gift.

In this case, the mother's friend "KKKLLL" confirms the contents of provision of information on the request screen of FIG. 18. Then, the mother's friend "KKKLLL" writes a name of a commodity which the friend wants or does not want as the gift, into columns of "desired commodity" and "undesired commodity", and then depresses an "Accept" button, or writes nothing and depresses a "Not Accept" button. Here, a content to be written into the column of the "undesired commodity" is information on the gift requester (i.e., information on the commodity which the gift requester does not desire).

Next, in step S306, the adjustment/control unit 26 waits until the reply is received from all persons belonging to each group. Here, as with FIG. 11, the reply term may be set, and the request screen may be transmitted a number of times within the reply term. Moreover, when the reply is not received within the reply term, it may be judged that the gift request is rejected. Here, in the present embodiment, it is assumed that the reply indicating the acceptance of the gift request is received from all the candidates. Then, the procedure advances to step S212 of FIG. 14.

When the reply indicating the acceptance of the gift request is performed, an image of the candidate or the like (e.g. a candidate's child in case of the mother's friend) may be able to be attached. In this case, an image stored in a memory, not shown, of the portable device 10B may be attached, or an image captured with the image capture unit 33 may be attached. Here, when the image of the candidate or the like is stored beforehand in the memory 23 of the server 20, the attachment of the image may be omitted. The usage way of the attached image is mentioned later.

The process of above-mentioned step S210 may be performed prior to step S202. In this case, step S202 is performed after the number of candidates is decided.

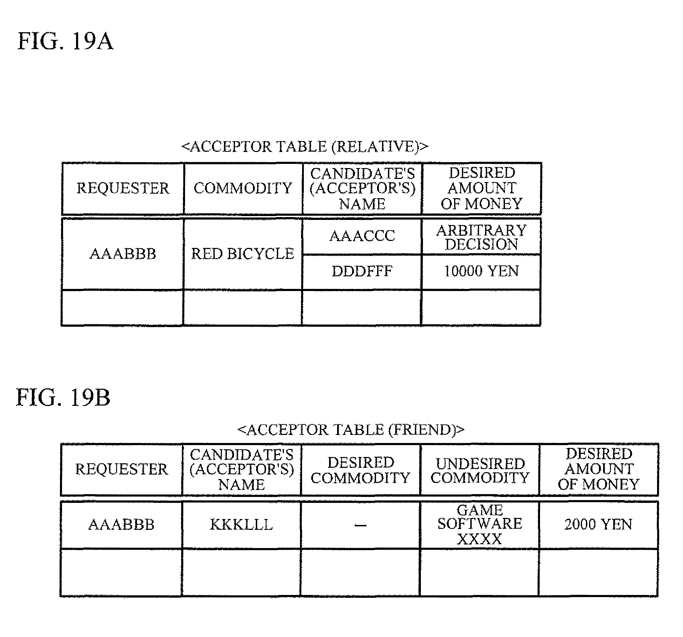

Next, in step S212, the adjustment/control unit 26 performs decision of the candidate and arrangement of the information based on the candidate's reply obtained in step S210. In the present embodiment, two candidates accept purchasing the red bicycle, a desired amount of money of the grandmother "AAACCC" is "arbitrary decision", and the desired amount of money of the aunt "DDDFFF" is "10000 yen", as illustrated in an acceptor table (relative) of FIG. 19A. Here, the adjustment/control unit 26 adjusts a total price and a burden price of the gift based on a relative's grade. Specifically, for the gift requester, the grandmother is a relationship in the second degree and the aunt is a relationship in the third degree. Therefore, the adjustment/control unit 26 may set the desired amount of money of the grandmother as 1.5 times (i.e., 15000 yen) as much as the desired amount of money of the aunt, based on the desired amount of money "10000 yen" of the aunt, for example. Here, when a plurality of candidates of the same degree of relationship exist, and the desired amount of money of each candidate is the "arbitrary decision", the adjustment/control unit 26 may set the same amount of money to each candidate. When the plurality of candidates of the same degree of relationship exist and the desired amount of money of the candidates are different from each other, the burden price of each candidate may be adjusted to a lowest desired amount of money. Moreover, the burden price of each candidate may be adjusted so that the total of the burden price of each candidate becomes a purchase price of the commodity (e.g. the same amount of money is added to each candidate or the amount of money is added to each candidate depending on the desired amount of money of each candidate).

Moreover, the adjustment/control unit 26 confirms that the mother's friend "KKKLLL" of the "friend" group has agreed with the gift request and a name "xxxx" of a latest game software as the undesired commodity has been inputted, as illustrated in an acceptor table (friend) of FIG. 19B. For example, it is assumed that the child of the mother's friend "KKKLLL" has already purchased the undesired commodity, and the mother's friend gives the gift requester the commodity inputted as the undesired commodity. In this case, the commodity inputted as the undesired commodity is a redundant commodity between children, i.e., a commodity same as the commodity which the child of the mother's friend "KKKLLL" has.

Next, in step S214 of FIG. 14, the adjustment/control unit 26 specifies a single candidate (acceptor).

Next, in step S216, the adjustment/control unit 26 judges whether the specified candidate corresponds to the requester main mode or the candidate main mode. When the judgment is positive (e.g. when the specified candidate is the grandmother or the aunt), the procedure advances to step S218.

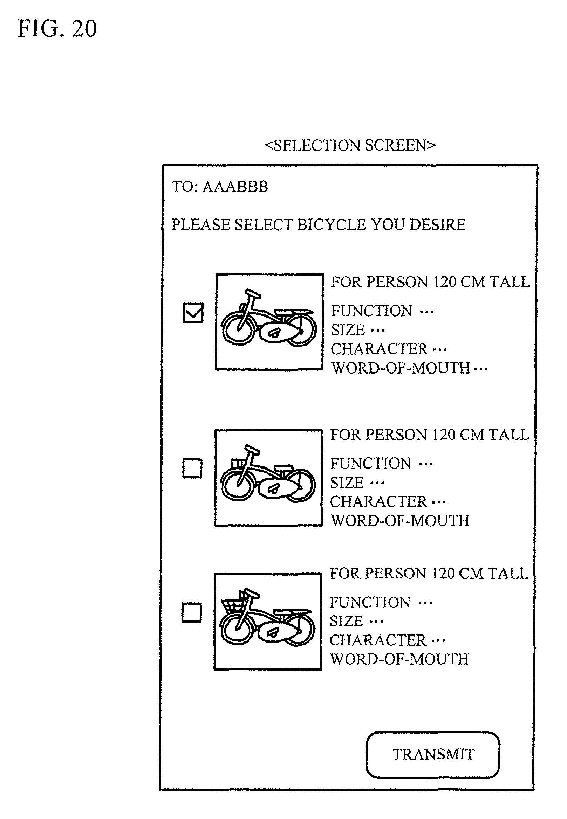

Advancing to step S218, the adjustment/control unit 26 offers the information on the red bicycle (see a selection screen of FIG. 20) to the gift requester (or the user of the portable device 10A), and causes the user to decide the gift. For example, the adjustment/control unit 26 collects the information on the bicycle with the price equal to or less than the amount of money adjusted by the adjustment/control unit 26, from the word-of-mouth information unit 40, and transmits images and specifications of about three types of bicycles and word-of-mouth information to the user, as illustrated in FIG. 20. In this case, when the word-of-mouth information unit 40 obtains reliable word-of-mouth information and transmits the reliable word-of-mouth information to the user, as proposed by the present applicant in Japanese patent application No. 2012-45848, the reliability of the information processing system 1 can be improved.

Next, in step S220, the adjustment/control unit 26 waits until the reply is received. Here, as with FIG. 11, the adjustment/control unit 26 may set the reply term, and may transmit the selection screen of FIG. 20 a number of times within the reply term. When the reply is not received within the reply term, the adjustment/control unit 26 may automatically select a most popular bicycle or a bicycle with the highest evaluation of the word-of-mouth information, or may cause the user (i.e., the acceptor) to select a bicycle. Then, the procedure advances to step S226.

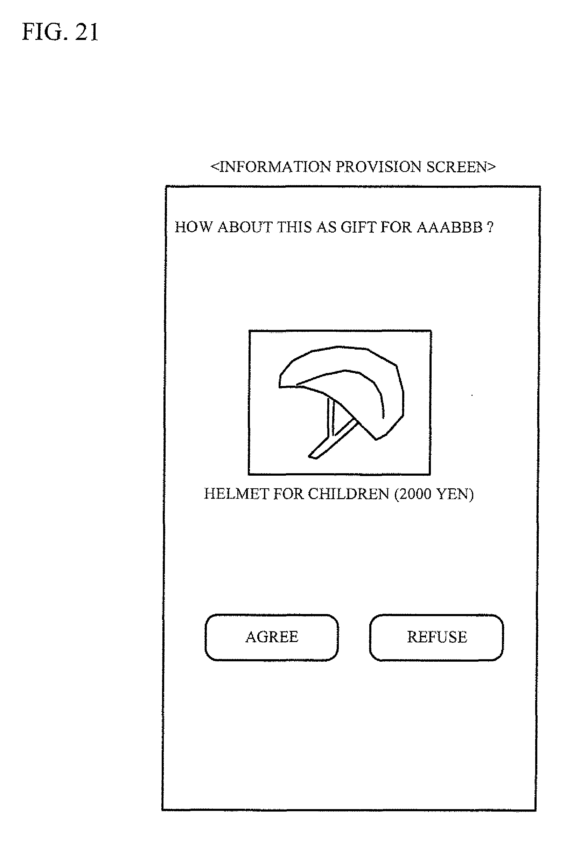

On the other hand, when the judgment of step S216 is negative (i.e., the specified candidate corresponds to the candidate main mode), the procedure advances to step S222, the adjustment/control unit 26 performs provision of information to the mother's friend "KKKLLL" which is the candidate. In this case, when the candidate of the mother's friend inputs the desired commodity, the adjustment/control unit 26 offers information on the desired commodity to the candidate of the mother's friend. On the other hand, when the desired commodity is not inputted, the adjustment/control unit 26 offers information on a commodity relevant to the purchase commodity of the relative group, as a purchase commodity of the friend group, after excepting the undesired commodity. In the present embodiment, since the purchase commodity of the relative group is the "red bicycle", the adjustment/control unit 26 offers information (i.e., an information provision screen as illustrated in FIG. 21) on a helmet (about 2000 yen) of a color suitable for the red bicycle to the mother's friend "KKKLLL".

Next, in step S224, the adjustment/control unit 26 waits until the reply is received. Also in this case, the adjustment/control unit 26 may set the reply term, and may transmit the selection screen of FIG. 21 a number of times within the reply term. When the reply is not received within the reply term or the reply indicating rejection is received, the adjustment/control unit 26 may obtain information on a commodity which is popular among children within the set amount of money from the word-of-mouth information unit 40, and may perform provision of the information again. When the plurality of candidates (i.e., acceptors) exist and the reply is received from at least one candidate within the reply term, the reply may be treated as all the candidates' consensus. After step S224, the procedure advances to step S226.

Advancing to step S226 after the process of step S220 or S224, the adjustment/control unit 26 judges whether all candidates (i.e., all acceptors) are specified. When the judgment of step S226 is negative, a next candidate (i.e., a next acceptor) is specified in step S228, and then the procedure advances to step S216. Then, the processes and the judgments of steps S216 to S228 are repeated, and when the judgment of step S226 is positive, the procedure advances to step S230. In the processes of steps S214 to S228, the processes of steps S216 to S224 may be simultaneously performed to all candidates (i.e., all acceptors), and the procedure may advance to step S230 when the reply of all candidates is obtained.

Advancing to step S230, the adjustment/control unit 26 decides a purchase commodity based on the reply of steps S220 and S224. Here, it is assumed that the red bicycle is decided as the purchase commodity of the relative group and the helmet is decided as the purchase commodity of the friend group. Here, since it is also considered that the requester has already possessed the helmet, the adjustment/control unit 26 may inquire of the gift requester the presence or absence of possession of the commodity decided in the candidate main mode.

Next, in step S232, the adjustment/control unit 26 performs a purchase procedure of the bicycle and the helmet to an unillustrated purchase site via the communication unit 21, and performs an image attachment process. In this case, the image processing unit 25 creates a synthetic image in which an image of the face of the grandmother or the aunt is arranged around the image of the bicycle to be given as the gift, in order to create an image to be attached to the bicycle of the gift. Similarly, the image processing unit 25 creates a synthetic image in which an image of the child's face of the mother's friend "KKKLLL" is arranged around the image of the helmet of the gift. Then, when the purchase procedure is performed on the unillustrated purchase site, the adjustment/control unit 26 attaches the synthetic image created by the image processing unit 25 to the mail, and informs the gift requester of information indicating that the synthetic image is attached to the gift (i.e., like a message card, the synthetic image is enclosed with the gift). Here, the adjustment/control unit 26 charges the purchase amount to the candidate (i.e. acceptor) later. In this case, the adjustment/control unit 26 may send a mail into which a transfer designation is written, to each candidate (i.e. acceptor), for example.

As described above, according to the present embodiment, the adjustment/control unit 26 offers the information on joint purchase of the commodity to the plurality of candidates via the communication unit 21 and performs the adjustment about the commodity. Therefore, even when the plurality of candidates purchase the gift jointly, it is possible to easily perform the joint purchase by the adjustment of the purchase commodity, the adjustment of amount of payment and so on. Thereby, it is possible to get an expensive gift (e.g. a digital device such as a camera and a portable device), and additionally get an accessory of the digital device (e.g. a lens, a speaker, a headphone, or a storage medium).

In the present embodiment, since the adjustment/control unit 26 defines which of the gift requester or the candidate an initiative about the decision of the commodity is given to (i.e., the requester main mode or the candidate main mode is set), based on the candidate's attribute, an appropriate commodity can be decided depending on the candidate's attribute.

In the present embodiment, since the adjustment/control unit 26 offers the information on the gift requester (e.g. information displayed on the request screen of FIG. 18) to the plurality of candidates, each of the candidates can decide the commodity (i.e., the desired commodity) which he/she wants to purchase and the commodity (i.e., the undesired commodity) which he/she does not want to purchase, based on the offered information.

In the present embodiment, since the adjustment/control unit 26 collects the information on the gift requester and the information on the commodity (e.g., information on the undesired commodity) from the plurality of candidates by using the request screen of FIG. 18, it is possible to decide the commodity as the gift, based on information which the candidates have.

Moreover, the adjustment/control unit 26 divides the plurality of candidates into the plurality of groups (e.g. the relative group and the friend group) based on the gift requester's attribute, and offers different information for groups. Thereby, since the joint purchase is performed for persons having near attributes (i.e., for each group), smooth joint purchase is realizable.

Moreover, since the adjustment/control unit 26 offers the information on the gift to the plurality of candidates, based on the information on the event set according to each candidate as illustrated in FIG. 8, it is possible to give and receive the appropriate gift for each event.

Moreover, since the adjustment/control unit 26 obtains the images of the plurality of candidates and the image of the commodity, and causes the image processing unit 25 to synthesize these images as the image to be attached to the gift, an attached document (e.g. the message card) to be attached to the gift can be easily created.

Moreover, since the adjustment/control unit 26 creates the request screen illustrated in FIG. 17 with the use of the image of the gift requester, the candidate can easily imagine the appearance of the gift requester which uses the gift by viewing the image.

In the present embodiment, since the adjustment/control unit 26 offers the information on the commodity relevant to the purchase commodity or a purchase scheduled commodity of the relative group to the friend group, based on the information on the purchase commodity or the purchase scheduled commodity of the relative group, the gift requester can get the commodity which the gift requester initiatively selects and another commodity relevant to the selected commodity during one event.

The adjustment/control unit 26 may set the timing which offers the information to the relative group earlier than the timing which offers the information to the friend group, i.e., may offer the information to the friend group after the purchase commodity of the relative group is decided. By doing so, a commodity which is associated with the purchase commodity of the relative group can be decided as the commodity which the friend group gives.

When there is a commodity which needs replacement by purchase, the gift requester may input a model number of the commodity and information indicating that the gift requester wants a latest model. In this case, the adjustment/control unit 26 needs to offer the information on the latest model corresponding to the model number to the candidate.

In the above-mentioned embodiment, there is explained a case where the adjustment of the gift is performed according to the gift request for each event, but the adjustment of the gift is not limited to this. When the traveling of the candidate is inputted into the server 20, for example, the adjustment/control unit 26 may inquire about whether the gift requester wants the gift (e.g. a souvenir). In this case, when the gift requester inputs a genre, a commodity name and so on of the desired souvenir in the screen of the portable device 10A, the adjustment/control unit 26 can notify the candidate of the inputted information. Thereby, the souvenir according to the gift requester's desire can be purchased.

In the above-mentioned embodiment, there is explained a case where the event is decided beforehand, but the event is not limited to this. When an event which cannot be predicted from a birth date occurs (e.g. the victory of a chorus contest, or the like), the adjustment/control unit 26 may perform a temporary gift request according to input of the event from the gift requester. When the candidate realizes that a temporary event has occurred in the gift requester, the candidate may be able to register into the server 20 the information indicating that the temporary event has occurred in the gift requester. In this case, the adjustment/control unit 26 needs to perform the gift request corresponding to the registered temporary event to all the candidates or at least a part of the candidates.

Here, when the gift requester performs a blog, a twitter, a SNS (Social Networking Service), and the like, the adjustment/control unit 26 may obtain information on the gift requester (e.g. a favorite genre, a commodity purchased recently, preference, or the like) from these, and may select a candidate of the gift.

In the above-mentioned embodiment, there is explained a case where the gift requester requests the "red bicycle" in the requester main mode, but the gift request is not limited to this. For example, the gift requester may specify a manufacturer, a model number, a price, and so on, and request the gift. In this case, when a budget of the candidate is more than the specified price, the adjustment/control unit 26 may perform the adjustment of the upgrade based on the specified model number. When the budget of the candidate is less than the specified price, the adjustment/control unit 26 may perform the adjustment of the downgrade.

In the above-mentioned embodiment, there is explained a case where the server 20 performs the decision of the commodity as the gift and performs the process up to the purchase of the gift, but a process which the server 20 performs is not limited to this. For example, the server 20 may perform the process up to the decision of the gift and actual purchase may be performed by the candidate. In this case, the adjustment/control unit 26 may adjust (decide) a store where the commodity is purchased, based on a log (i.e., a position range on which the candidate lives usually) of position information in the GPS module 34 of the portable device 10B, and may offer position information about the ubiety of a store to the portable device 10B via the communication unit 21. Moreover, in addition to the ubiety of the store, the word-of-mouth information unit 40 may offer the word-of-mouth information about the store. In this case, especially, when there are a plurality of candidates of stores, the respective stores can be compared by the word-of-mouth information.

In the above-mentioned embodiment, there is explained a case where the information processing system 1 is used in a private life, but the usage of the information processing system 1 is not limited to this. For example, the information processing system 1 may be used for business. In this case, a midyear gift, a year-end gift-giving and so on may be added as the customary events, and advancement, retirement (voluntary termination such as congratulation retirement), birth, or the like may be added as events that cannot be predicted from the calendar unit 24.

In the above-mentioned embodiment, there is explained a case where the device of one hand size with a phone function is adopted as the portable device 10, but the portable device 10 is not limited to this. A tablet computer and a personal computer may be adopted as the portable device 10.

In the above-mentioned embodiment, there is explained a case where the server 20 performs various processes about joint purchase, but the kind of device is not limited to this. In the above-mentioned embodiment, the control unit 16 in the portable device 10A may perform the process which the server 20 performs.

The above-mentioned embodiment is a preferable embodiment of the present invention. However, the present invention is not limited to the above-mentioned embodiment, and other embodiments, variations and modifications may be made without departing from the scope of the present invention.

### DESCRIPTION OF REFERENCE NUMERALS

- 10: portable device
- 20: server
- 21: communication unit
- 23: memory
- 25: image processing unit
- 26: adjustment/control unit

## Claims

1. An electronic device **characterized by** comprising:
an information offering unit that offers information on joint purchase of a commodity to a plurality of candidates; and
an adjusting unit that performs adjustment about the commodity.

2. The electronic device according to claim 1, **characterized in that**
the adjusting unit adjusts which of a purchase side of the commodity or a reception side of the commodity an initiative about the decision of the commodity is given to.

3. The electronic device according to claim 1 or 2, **characterized in that**
the information offering unit offers information on a receiver of a jointly purchased commodity to the plurality of candidates.

4. The electronic device according to claim 3, **characterized by** comprising:
a first collection unit that collects the information on the receiver of the commodity from the plurality of candidates.

5. The electronic device according to any one of claims 1 to 4, **characterized by** comprising:
a second collection unit that collects information on the commodity from the plurality of candidates.

6. The electronic device according to any one of claims 1 to 5, **characterized in that**
the adjusting unit divides the plurality of candidates into a plurality of groups, based on an attribute of a receiver of a jointly purchased commodity.

7. The electronic device according to claim 6, **characterized in that**
the information offering unit offers different information as the information on joint purchase of the commodity for the plurality of group.

8. The electronic device according to claim 6 or 7, **characterized in that**
the plurality of groups include a first group and a second group,
the information offering unit shifts timing which offers information to the first group from timing which offers information to the second group.

9. The electronic device according to any one of claims 1 to 8, **characterized in that**
the adjusting unit performs adjustment about the decision of the commodity.

10. The electronic device according to any one of claims 1 to 9, **characterized in that**
the adjusting unit performs adjustment about a price of the commodity.

11. The electronic device according to any one of claims 1 to 10, **characterized in that**
the adjusting unit offers information on a purchase place of the commodity.

12. The electronic device according to any one of claims 1 to 11, **characterized by** comprising:
a first storage that stores information on a receiver of a jointly-purchased commodity;
wherein the information offering unit offers the information on joint purchase of the commodity to the plurality of candidates based on the information on the receiver stored into the first storage.

13. The electronic device according to claim 12, **characterized in that**
the information on the receiver of the jointly-purchased commodity includes at least one of information on a commodity which the receiver desires, and information on a commodity which the receiver purchased in the past.

14. The electronic device according to any one of claims 1 to 13, **characterized by** comprising:
a second storage that stores event information;
wherein the information offering unit offers the information on joint purchase of the commodity to the plurality of candidates, based on the event information stored into the second storage.

15. The electronic device according to any one of claims 1 to 14, **characterized by** comprising:
a third storage that stores image data about the plurality of candidates.

16. The electronic device according to claim 15, **characterized in that**
the third storage stores image data about the commodity.

17. The electronic device according to claim 16, **characterized by** comprising:
an image synthesis unit that synthesizes the image data about the plurality of candidates and the image data about the commodity which are stored into the third storage.

18. The electronic device according to any one of claims 1 to 17, **characterized by** comprising:
a fourth storage that stores an image of a receiver of a jointly-purchased commodity.

19. The electronic device according to any one of claims 1 to 18, **characterized by** comprising:
a fifth storage that stores information on the joint purchase.

20. The electronic device according to any one of claims 1 to 19, **characterized in that**
the information offering unit offers information on replacement by purchase.

21. An electronic device **characterized by** comprising:
an information obtaining unit that obtains information on a purchase commodity or a purchase scheduled commodity of a first group; and
an information offering unit that offers information on a commodity relevant to the purchase commodity or the purchase scheduled commodity of the first group to a second group, based on the information obtained by the information obtaining unit, the second group being different from the first group.

22. The electronic device according to claim 21, **characterized by** comprising:
a recruit unit that recruits a member belonging to at least one of the first group and the second group by self-recommendation or recommendation by others.

23. The electronic device according to claim 22, **characterized in that**
the recruit unit recruits a member of the recommendation by others by designation from a receiver of commodities which the first group and the second group have purchased.

24. The electronic device according to any one of claims 21 to 23, **characterized in that**
the information offering unit offers information on a purchase place of the relevant commodity.

25. The electronic device according to claim 24, **characterized by** comprising:
a position information detecting unit that detects position information of each member belonging to the second group;
wherein the information offering unit offers the information on the purchase place of the relevant commodity, based on the position information of each member belonging to the second group.

26. The electronic device according to any one of claims 21 to 25, **characterized in that**
the information offering unit offers the information on the relevant commodity, based on information on a number of members belonging to the second group.

27. The electronic device according to any one of claims 21 to 26, **characterized in that**
the information offering unit offers information on a commodity cheaper than the purchase commodity or the purchase scheduled commodity of the first group, as the information on the relevant commodity.

28. The electronic device according to any one of claims 21 to 27, **characterized in that**
the information offering unit offers the information on the relevant commodity in response to a request from the second group.

29. The electronic device according to any one of claims 21 to 28, **characterized by** comprising:
an event storage that stores event information;
wherein the information offering unit offers the event information stored into the event storage, to the first group and the second group.

30. The electronic device according to any one of claims 21 to 29, **characterized by** comprising:
an adjusting unit that divides a plurality of members into the first group and the second group according to an attribute of each member.

31. The electronic device according to any one of claims 21 to 30, **characterized by** comprising:
an image storage that stores an image of a member belonging to the first group, and/or an image of a person relevant to a member belonging to the second group.

32. The electronic device according to claim 31, **characterized by** comprising:
a creating unit that creates notification information to a receiver of commodities which the first group and the second group have purchased, with the use of the image stored into the image storage.
